(19) Europäisches Patentamt
European Patent Office
Office européen des brevets

(11) Veröffentlichungsnummer: **0 063 300**
**B1**

(12) # EUROPÄISCHE PATENTSCHRIFT

(45) Veröffentlichungstag der Patentschrift: **04.09.85**

(51) Int. Cl.⁴: **C 09 B 67/42,** C 09 B 67/32, C 09 B 67/24, D 06 P 1/48

(21) Anmeldenummer: **82102886.7**

(22) Anmeldetag: **05.04.82**

(54) **Pulverige Farbstoffeinstellungen, ihre Herstellung und Verwendung.**

(30) Priorität: **16.04.81 DE 3115546**

(43) Veröffentlichungstag der Anmeldung: **27.10.82 Patentblatt 82/43**

(45) Bekanntmachung des Hinweises auf die Patenterteilung: **04.09.85 Patentblatt 85/36**

(84) Benannte Vertragsstaaten: **CH DE GB LI**

(56) Entgegenhaltungen:
**FR - A - 725 256**
**FR - A - 2 179 137**
**FR - A - 2 194 755**

(73) Patentinhaber: **BAYER AG, Konzernverwaltung RP Patentabteilung, D-5090 Leverkusen 1 Bayerwerk (DE)**

(72) Erfinder: **Petroll, Hans-Werner, Ing.-grad., Buschweg 1, D-5067 Kürten 3 (DE)**
Erfinder: **Wolf, Karlheinz, Dr., Paul-Klee-Strasse 77, D-5090 Leverkusen (DE)**

**EP 0 063 300 B1**

Anmerkung: *Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).*

**Beschreibung**

Gegenstand der Erfindung sind pulvrige Farbstoffeinstellungen, die einen wasserlöslichen Farbstoff und native Stärke und/oder durch Quellen, Säurebehandlung oder oxidative Behandlung modifizierte Stärke und gegebenenfalls übliche Einstellmittel und feste Säuren enthalten, sowie ihre Herstellung und Verwendung in Färbebädern, Klotzflotten und Druckpasten.

Als wasserlösliche Farbstoffe kommen anionische und bevorzugt kationische Farbstoffe in Frage.

Die anionischen Farbstoffe enthalten als wasserlöslichmachende Gruppe eine oder mehrere COOH-Gruppen, bevorzugt aber $SO_3H$-Gruppen oder deren Salze, wie z.B. $NH_4$-, Li-, Na-, K-Salze, oder es handelt sich um 1:1- oder 1:2-Metallkomplexfarbstoffe wie 1:1-Nickelkomplexe, 1:1-Kobaltkomplexe, 1:1-Kupferkomplexe, 1:1-Chromkomplexe oder symmetrische oder asymmetrische 1:2-Kobaltkomplexe oder 1:2-Chromkomplexe von Mono-, Dis- oder Polyazo- oder Azomethin-Farbstoffen, die als metallkomplexbildende Gruppen o,o′-Dioxy-, o-Oxy-o′-amino-, o-Oxy-o′-alkoxy-, o-Oxy-o′-carboxy- oder o-Alkoxy-o′-amino-azo- oder -azomethin-Gruppen aufweisen.

Die Säuregruppen enthaltenden Farbstoffe können z.B. der Phthalocyanin-, Nitro-, Di- oder Triphenylmethan-, Oxazin-, Thiazin-, Dioxazin-, Xanthen-, vor allem aber der Anthrachinon- und Azo-Reihe, wie der Monoazo-, Disazo- oder Polyazoreihe angehören. Sie sind beispielsweise in «Colour Index», 3. Ed., Vol. 1, S. 1001 bis 1562, beschrieben.

Die Säuregruppen enthaltenden Farbstoffe können auch faserreaktive Gruppen enthalten. Geeignete anionische Reaktivfarbstoffe sind z.B. in «Colour Index», 3. Ed., Vol. 4, S. 4119 bis 4121, beschrieben.

Bei den wasserlöslichen kationischen Farbstoffen handelt es sich um solche, welche ein farbiges Kation und ein farbloses Anion besitzen. Geeignete kationische Farbstoffe sind insbesondere Oniumgruppen enthaltende Farbstoffe der Diarylmethan-, Triarylmethan-, Methin-, Azo-, Anthrachinon-, Rhodamin-, Thiazin- und Oxazin-Reihe, wie sie beispielsweise in «Colour Index», 3. Ed., Vol. 1, Seiten 1607 bis 1688, und von K. Venkataramen in «The Chemistry of Synthetic Dyes», (1971), Vol. IV, Seiten 159 bis 206 beschrieben sind. Besonders geeignete Farbstoffe sind bekannt aus den US-Patentschriften 2 734 901, 2 972 508, 3 113 825, 3 345 355 und 3 347 865, der belgischen Patentschrift 629 823 und der britischen Patentschrift 807 241.

Geeignete farblose Anionen sind sowohl organische als auch anorganische Säurereste, beispielsweise Halogenide, insbesondere Chlorid, Hydroxylat, Sulfat, Bisulfat, Nitrat, Phosphat, Hydrogencarbonat, Carbonat, Methosulfat, Thiocyanat, Tri- und Tetrachlorozinkat, Acetat, Chloracetat, Formiat, Propionat, Benzoat oder Benzolsulfonat.

Unter nativer Stärke werden beispielsweise Kartoffel-, Bohnen-, Hafer-, Weizen-, bevorzugt Mais-, und besonders bevorzugt Reisstärke (s. Ullmann, Encyclopädie der techn. Chemie (1965), Band 16, Seiten 313–318) verstanden.

Von den modifizierten Stärketypen sind säuremodifizierte Stärken, sogenannte «dünnkochende Stärken», bevorzugt, bei denen durch Behandlung mit verdünnten Säuren unterhalb der Verkleisterungstemperatur ein begrenzter hydrolytischer Abbau der Stärke in den zugänglicheren intermicellaren Bereich erreicht wird, wobei sich reduzierende Endgruppen nur in geringem Masse bilden (s. Ullmann, Enzyclopädie der techn. Chemie (1965), Band 16, Seite 325 und 343).

Es können auch Mischungen aus verschiedenen Stärketypen eingesetzt werden.

Bevorzugte erfindungsgemässe Einstellungen enthalten feste Säuren, durch die die Wasserlöslichkeit der Einstellungen wesentlich verbessert wird.

Als feste Säuren können beispielsweise $NaHSO_4$, $NaH_2PO_4$, Zitronensäure, Oxalsäure und bevorzugt Amidosulfonsäure eingesetzt werden.

Übliche Einstellmittel sind zum Beispiel Entstaubungsmittel wie Öl/Emulgator-Mischungen, Phthalsäureester, Verschnittmittel wie $Na_2SO_4$, NaCl, Dextrine, Zucker, Natriumbenzolsulfonat, Harnstoff, Tenside wie Ethylenoxid-Addukte an langkettige Alkohole, Amine oder Alkylphenole, Ligninsulfonsäure oder Kondensationsprodukte aus Naphthalin, Formaldehyd und Schwefelsäure. Entsprechende Tenside sind z.B. von K. Lindner in «Tenside-Textilhilfsmittel-Waschrohstoffe», Band 1, (1964), Seiten 571 bis 917, und von N. Schönfeldt in «Grenzflächenaktive Ethylenoxid-Addukte», (1976), Seiten 42 bis 95, beschrieben.

Die Einstellungen enthalten 10 bis 95 Gew.-%, bevorzugt 20 bis 85 Gew.-% wasserlösliche Farbstoffe, 2 bis 90 Gew.-%, bevorzugt 5 bis 75 Gew.-% der vorstehend genannten Stärken, 0 bis 30 Gew.-%, bevorzugt 0 bis 15 Gew.-% feste Säuren und 0 bis 85 Gew.-%, bevorzugt 0 bis 50 Gew.-% übliche Einstellmittel.

Zur Herstellung der Einstellungen werden bevorzugt die trockenen Komponenten gemischt und gemahlen oder die trockenen, gemahlenen Komponenten gemischt. Es können aber auch die wässrigen Mischungen der Komponenten ohne Säurezusatz nach üblichen Verfahren beispielsweise durch Blech-, Walzen-, Schaufel- oder Sprühtrocknung mit Einstoff- oder Zweistoffdüsen getrocknet, gegebenenfalls gemahlen und mit Säuren gemischt werden.

Es ist bekannt, dass sehr viele Farbstoffe die unangenehme Eigenschaft besitzen, dass sie in feuchter Atmosphäre, beispielsweise bei 75% relativer Luftfeuchtigkeit verklumpen, fest oder schmierig werden, so dass sie nur noch schwer zu handhaben sind. Bisher konnte dieser Nachteil nicht behoben werden, ohne dass die anwendungstechnischen Eigenschaften der Farbstoffeinstellung, insbesondere ihre Löslichkeit in Wasser verschlechtert wurden. Die erfindungsgemässen pulvrigen Farbstoffeinstellungen haben den Vorteil, dass sie sich in Wasser gut lösen und in feuchter Atmosphäre, wie sie beispielsweise in Färbereien vorherrscht, nicht verklumpen, so dass man auch unter diesen Bedingungen die Farbstoffe aus den Versandgebinden leicht entnehmen kann.

Beispiel 1

50 g des blauen Farbstoffs der Formel

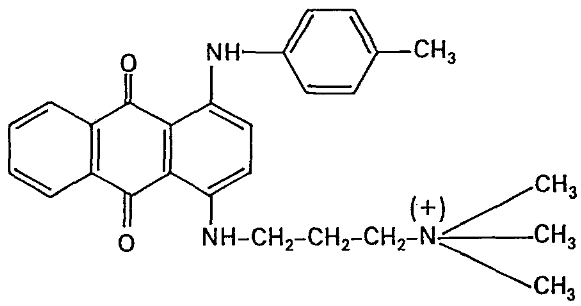

$CH_3$-$SO_4$(-)

werden mit
34,5 g Reisstärke,
15,0 g Amidosulfonsäure und
0,5 g einer Öl-Emulgator-Mischung gemahlen und gemischt.

Man erhält eine pulvrige Farbstoffmischung, die in feuchter Atmosphäre weder schmiert noch verhärtet. 140 g der Farbstoffmischung, angeteigt mit 140 ml 60%iger Essigsäure, lösen sich gut innerhalb von 10 min. in 1 l Wasser von 90°C.

Die Stabilität der Farbstoffmischung bei 75% relative Luftfeuchtigkeit kann in einem geschlossenen Gefäss (Exsikkator) über eine gesättigte, wässrige Kochsalzlösung geprüft werden. Lagert man unter diesen Bedingungen 20 g der obigen Farbstoffmischung 8 Tage, tritt keine Verhärtung oder ein Schmieren auf. Wird unter den gleichen Bedingungen eine Einstellung gelagert, die statt Reisstärke Natriumsulfat, Natriumchlorid, Dextrin oder Zucker enthält, wird aus der pulvrigen Farbstoffmischung ein fester, zäher Klumpen, der nicht wieder zerkleinert werden kann.

Beispiel 2

82,4 g des blauen Farbstoffs aus Beispiel 1 werden mit
56,8 g Reisstärke und
0,8 g einer Öl-Emulgator-Mischung gemahlen und gemischt.

Man erhält eine pulvrige Farbstoffmischung, die in feuchter Atmosphäre weder schmiert noch verhärtet.

Beispiel 3

50 g des blauen Farbstoffs aus Beispiel 1 werden mit
15,5 g Reisstärke
15,0 g Maisstärke
9,0 g Dextrin
10,0 g Amidosulfonsäure und
0,5 g einer Öl-Emulgator-Mischung gemahlen und gemischt.

Man erhält eine pulvrige Farbstoffmischung, die in feuchter Atmosphäre weder schmiert noch verhärtet. 140 g der Farbstoffmischung, angeteigt mit 140 ml 60%iger Essigsäure, lösen sich gut innerhalb von 10 min in 1 l Wasser von 90°C.

Beispiel 4

26 g des blauen Farbstoffs der Formel

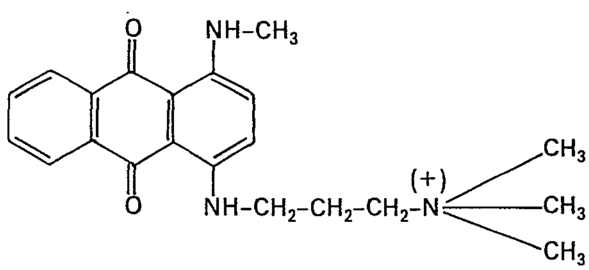

$CH_3$-$SO_4$(-)

werden mit
72 g Reisstärke und
2 g einer Öl-Emulgator-Mischung gemahlen und gemischt.

Man erhält eine pulvrige Farbstoffmischung, die in feuchter Atmosphäre weder schmiert noch verhärtet.

Beispiel 5

17,8 g des gelben Farbstoffs der Formel

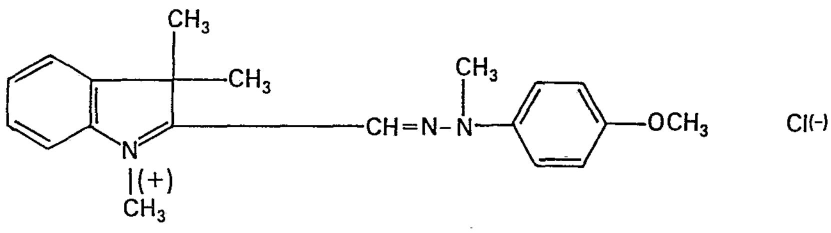

16,3 g des roten Farbstoffs der Formel

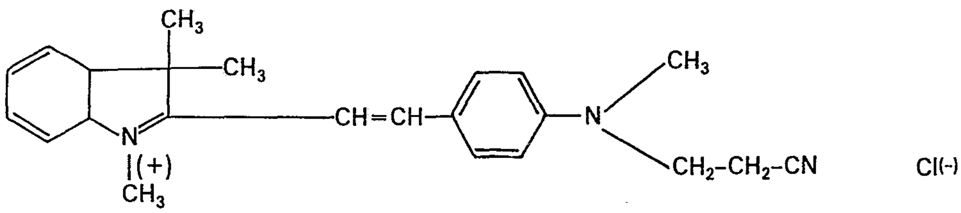

und 33,4 g des grünen Farbstoffs der Formel

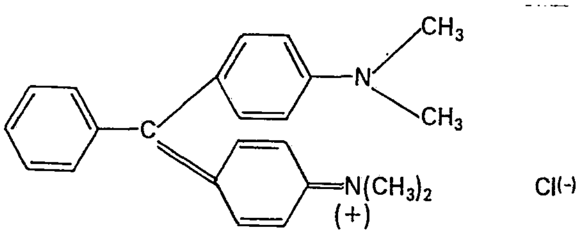

werden mit
26,5 g Maisstärke
4,0 g Amidosulfonsäure und
2,0 g einer Öl-Emulgator-Mischung gemahlen und gemischt.

Man erhält eine pulvrige Farbstoffmischung, die in feuchter Atmosphäre weder schmiert noch verhärtet. 100 g der Farbstoffmischung, angeteigt mit 100 ml 60%iger Essigsäure, lösen sich gut innerhalb von 10 min. in 1 l Wasser von 90°C.

Beispiel 6

84 g des roten Farbstoffs der Formel

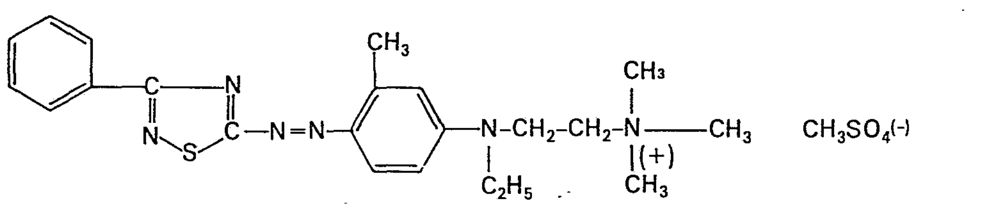

werden mit
10 g Reisstärke
5 g Polyvinylalkohol und
1 g einer Öl-Emulgator-Mischung gemahlen und gemischt.

Man erhält eine pulvrige Farbstoffmischung, die in feuchter Atmosphäre weder schmiert noch verhärtet.

Beispiel 7

50,0 g des blauen Farbstoffs aus Beispiel 1,
5,0 g Reisstärke
5,0 g Amidosulfonsäure
0,5 g einer Öl-Emulgator-Mischung und
39,5 g dünnkochende Wachsmaisstärke Typ SNOWFLAKE® 06598 der Firma Maizena, Hamburg werden gemahlen und gemischt.

Man erhält eine pulvrige Farbstoffmischung, die in feuchter Atmosphäre weder schmiert noch verhärtet und die in Beispiel 1 angegebenen Eigenschaften besitzt.

Beispiel 8

50,0 g des blauen Farbstoffs aus Beispiel 1,
0,5 g einer Öl-Emulgator-Mischung und
49,5 g oxidierte Kartoffelstärke Typ PERFECTAMYL® 3108-6 % der Firma Avebe Veendam, Holland werden gemahlen und gemischt.

Man erhält eine pulvrige Farbstoffmischung, die in feuchter Atmosphäre weder schmiert noch verhärtet und die in Beispiel 1 angegebenen Eigenschaften besitzt.

Beispiel 9

50,0 g des blauen Farbstoffes aus Beispiel 1,
0,5 g einer Öl-Emulgator-Mischung
5,0 g Amidosulfonsäure und
44,5 g kaltquellende Stärke Typ SNOWFLAKE® 30 091 der Firma Maizena, Hamburg werden gemahlen und gemischt.

Man erhält eine pulvrige Farbstoffmischung, die in feuchter Atmosphäre weder schmiert noch verhärtet und die in Beispiel 1 angegebenen Eigenschaften besitzt.

**Patentansprüche**

1. Pulvrige Farbstoffeinstellungen, die einen wasserlöslichen Farbstoff und native Stärke und/oder durch Quellen, Säurebehandlung oder oxidative Behandlung modifizierte Stärke enthalten.
2. Farbstoffeinstellungen nach Anspruch 1, dadurch gekennzeichnet, dass sie eine feste Säure enthalten.
3. Farbstoffeinstellungen nach Anspruch 1, dadurch gekennzeichnet, dass sie als wasserlöslichen Farbstoff einen anionischen oder kationischen Farbstoff enthalten.
4. Farbstoffeinstellungen nach Anspruch 3, dadurch gekennzeichnet, dass sie einen kationischen Farbstoff der Diarylmethan-, Triarylmethan-, Methin-, Azo-, Anthrachinon-, Rhodamin-, Thiazin- oder Oxazin-Reihe enthalten.
5. Farbstoffeinstellungen nach Anspruch 1, dadurch gekennzeichnet, dass sie

10–95 Gew.-% eines wasserlöslichen Farbstoffs
2–90 Gew.-% Stärke
0–30 Gew.-% feste Säure und
0–50 Gew.-% eines üblichen Einstellmittels

enthalten.

6. Verfahren zur Herstellung von pulverigen Farbstoffeinstellungen des Anspruchs 1, dadurch gekennzeichnet, dass man die trockenen Komponenten mischt und mahlt oder einzeln mahlt und dann mischt oder die wässrigen Mischungen der Komponenten trocknet und mahlt.
7. Verwendung der Farbstoffeinstellungen nach Anspruch 1 zur Herstellung von Färbebädern, Klotzflotten und Druckpasten.

**Revendications**

1. Mélanges colorants en poudre, qui contiennent un colorant soluble dans l'eau et de l'amidon natif et/ou un amidon modifié par gonflement, traitement à l'acide ou traitement oxydant.
2. Mélanges colorants selon la revendication 1, caractérisés en ce qu'ils contiennent un acide solide.
3. Mélanges colorants selon la revendication 1, caractérisés en ce qu'ils contiennent comme colorant soluble dans l'eau un colorant anionique ou cationique.
4. Mélanges colorants selon la revendication 3, caractérisés en ce qu'ils contiennent un colorant cationique de la série des diarylméthanes, de la série des triarylméthans, de la série méthinique, de la série azoïque, de la série anthraquinonique, de la série de la rhodamine, de la série de la thiazine ou de la série de l'oxazine.
5. Mélanges colorants selon la revendication 1, caractérisés en ce qu'ils contiennent:

10–95% en poids d'un colorant soluble dans l'eau,
2–90% en poids d'amidon,
0–30% en poids d'acide solide et
0–50% en poids d'un agent de réglage habituel.

6. Procédé pour la fabrication de mélanges colorants en poudre selon la revendication 1, caractérisé en ce que l'on mélange et on broie les composants secs, ou bien on les broie individuellement et ensuite on les mélange, ou bien on sèche et on broie les mélanges aqueux des composants.
7. Utilisation des mélanges colorants selon la revendication 1 pour la fabrication de bains de teinture, de bains de foulardage et de pâtes d'impression.

**Claims**

1. Pulverulent dyestuff formulations which contain a watersoluble dyestuff and native starch and/or starch modified by swelling, acid treatment or oxidative treatment.
2. Dyestuff formulations according to Claim 1, characterised in that they contain a solid acid.
3. Dyestuff formulations according to Claim 1, characterised in that they contain an anionic or cationic dyestuff as the water-soluble dyestuff.
4. Dyestuff formulations according to Claim 3, characterised in that they contain a cationic dyestuff of the diarylmethane, triarylmethane, methine, azo, anthraquinone, rhodamine, thiazine or oxazine series.
5. Dyestuff formulations according to Claim 1, characterised in that they contain 10–95% by weight of a water-soluble dyestuff, 2–90% by weight of starch, 0–30% by weight of a solid acid and 0–50% by weight of a customary formulation additive.
6. Process for the preparation of pulverulent dyestuff formulations of Claim 1, characterised in that the dry components are mixed and ground or ground individually and then mixed or the aqueous mixtures of the components are dried and ground.
7. Use of the dyestuff formulations according to Claim 1 for the preparation of dyebatns, padding liquors and printing pastes.